# EUROPÄISCHE PATENTSCHRIFT

(11) **EP 2 390 432 B1**
(45) Veröffentlichungstag und Bekanntmachung des Hinweises auf die Patenterteilung: **26.03.2014**
(21) Anmeldenummer: 11167058.4
(22) Anmeldetag: 23.05.2011
(51) Int. Cl.: E04B 2/96, E06B 3/54, F24J 2/52

(54) **Hängekonstruktion**
Suspended construction
Construction suspendue

(30) Priorität: 25.05.2010 DE 202010005492 U
(43) Veröffentlichungstag der Anmeldung: 30.11.2011
(73) Patentinhaber: SCHÜCO International KG, 33609 Bielefeld (DE)
(72) Erfinder: Fritze, Frank, 33609, Bielefeld (DE)
(74) Vertreter: Dantz, Jan Henning

(56) Entgegenhaltungen:
- DE-C1- 10 024 168
- DE-U1- 20 010 299
- US-A- 3 734 550
- US-A- 4 936 065
- US-A- 5 245 808

## Beschreibung

Die vorliegende Erfindung betrifft eine Hängekonstruktion, insbesondere zur Montage an einer Fassade oder einem Dach, mit einem plattenförmigen Füllungselement, das zumindest an gegenüberliegenden Seiten an einem Profil randseitig eingefasst ist, wobei jedes Profil einen im Wesentlichen senkrecht zum Füllungselement verlaufenden Tragsteg aufweist, der an einer Unterkonstruktion festlegbar ist

Es gibt Pfosten-Riegel-Konstruktionen, die als Fassaden eingesetzt werden. Hierbei werden Pfosten und Riegel aneinander befestigt und können die auftretenden Belastungen aufnehmen. Für den Einsatz von Photovoltaikmodulen sind solche Pfosten-Riegel-Konstruktionen zu aufwändig.

Die US 3,734,550 offenbart eine Fassadenkonstruktion mit vertikalen Pfosten und horizontalen Riegeln, an denen Füllungselemente randseitig zwischen Dichtungen festgelegt sind. An den Riegeln ist ein Tragsteg vorgesehen, der an einer Unterkonstruktion fixiert wird.

Die DE 100 24 168 C1 offenbart eine Befestigungsanordnung für Fassadenmodule, die an einer gitterartigen Unterkonstruktion festgelegt werden. Die Fassadenmodule sind dabei über eine Andruckplatte und Federmittel an der Unterkonstruktion einclipsbar, um einfach montiert werden zu können.

Es ist daher Aufgabe der vorliegenden Erfindung, eine Hängekonstruktion zu schaffen, die auf einfache Weise die Montage von plattenförmigen Füllungselementen ermöglicht, und sowohl bei der Erstellung als auch bei der Renovierung von Fassaden montiert werden kann.

Diese Aufgabe wird mit einer Hängekonstruktion mit den Merkmalen des Anspruches 1 gelöst.

Erfindungsgemäß ist an jedem Profil ein Flügel vorgesehen, an dem ein Halter für das Füllungselement verschraubt ist. Dadurch können die Gewichtslasten durch das Füllungselement und andere Kräfte direkt über den Halter auf das Profil abgetragen werden, ohne dass eine aufwändige Verbindungskonstruktion gewählt werden muss. Der Halter kann auf einfache Weise an dem Flügel montiert werden.

Vorzugsweise ist der Flügel als integral mit dem Profil ausgebildete Leiste ausgebildet. Dadurch kann der Halter für das Füllungselement in beliebiger Höhe entlang der Leiste montiert werden. Zudem kann für eine stabile Abstützung der Füllungselemente auch eine Vielzahl von Befestigungsmitteln entlang des Flügels montiert werden.

Vorzugsweise ist an dem Profil ein U-förmiger Abschnitt ausgebildet, in den das Füllungselement randseitig eingefügt ist. Der U-förmige Abschnitt kann dabei integral mit dem Profil ausgebildet sein, das beispielsweise als metallisches Extrusionsprofil, insbesondere aus Aluminium, ausgebildet ist. Der Flügel kann dabei als Steg parallel zur Ebene des Füllungselementes ausgebildet sein, aber auch winkelförmige Konturen des Flügels für eine höhere Festigkeit oder andere Formen sind möglich. Zudem können an dem Flügel auch weitere Bauteile, wie Halter für Leitungen, befestigt sein.

Um mit einem Profil an gegenüberliegenden Seiten Füllungselemente festzulegen, weist jedes Profil vorzugsweise zwei U-förmige Abschnitte auf, die in unterschiedliche Richtungen ausgerichtet sind. Dadurch verringert sich die Anzahl der notwendigen Bauteile der Hängekonstruktion. Vorzugsweise ist jeweils ein Flügel auf der zum Füllungselement gewandten Seite des Tragsteges und ein U-förmiger Abschnitt an der gegenüberliegenden Seite ausgebildet. Dadurch ist das Profil im Querschnitt im Wesentlichen T-förmig ausgebildet. Statt eines Tragsteges können dabei auch mehrere Tragstege vorgesehen sein, beispielsweise auch als geschlossenes Hohlprofil. Dadurch können auch größere Gewichtslasten über das Profil abgetragen werden.

Der Halter zur Abstützung des Füllungselementes ist vorzugsweise als Winkel ausgebildet, so dass das Füllungselement nur an gegenüberliegenden Seiten in dem Profil eingefasst ist und über den Halter abgestützt wird. Für ein geschlossenes Erscheinungsbild ist es auch möglich, statt eines winkelförmigen Halters eine Leiste an dem Flügel zu montieren, die einen Spalt zwischen zwei Füllungsplatten überdeckt. Dadurch kann die Hängekonstruktion nach außen geschlossen ausgebildet werden.

Für eine stabile Festlegung der Füllungselemente sind diese vorzugsweise randseitig zwischen zwei Dichtungen klemmend festgelegt. Die Dichtungen können dabei an entsprechenden Schenkeln des Profils montiert sein. Als Füllungselemente werden vorzugsweise Photovoltaikmodule eingesetzt, die über die Hängekonstruktion an einer Fassade oder einem Dach montiert werden.

Die Erfindung wird nachfolgend anhand mehrerer Ausführungsbeispiele mit Bezug auf die beigefügten Zeichnungen näher erläutert. Es zeigen:
- Figur 1: eine perspektivische Ansicht einer erfindungsgemäßen Hängekonstruktion;
- Figur 2: eine perspektivische Ansicht einer modifizierten Hängekonstruktion;
- Figur 3: eine Schnittansicht durch die Hängekonstruktion der Figur 1;
- Figur 4: eine Schnittansicht durch die Hängekonstruktion der Figur 1;
- Figur 5: eine Schnittansicht durch eine modifizierte Hängekonstruktion;
- Figuren 6A bis 6E: mehrere Querschnittsansichten von Profilen für eine erfindungsgemäße Hängekonstruktion, und
- Figuren 7A und 7B: zwei Beispiele für modifizierte Hängekonstruktionen.

Eine Hängekonstruktion 1 umfasst ein Profil 2, das im Wesentlichen vertikal ausgerichtet ist und einen U-förmigen Abschnitt 3 aufweist, der einen Schenkel mit einer Profilierung 4 zur Abstützung einer äußeren Dichtung 11 sowie einen zweiten Schenkel mit einer Nut 5 aufweist. An der Nut 5 ist eine innere Dichtung 12 eingezogen. Zwischen den Dichtungen 11 und 12 ist ein plattenförmiges Füllungselement 9 klemmend festgelegt, das beispielsweise als Photovoltaikmodul, insbesondere Dünnschichtmodul, ausgebildet ist.

Das Profil 2 umfasst einen senkrecht zur Ebene der Füllungselemente 9 verlaufenden Tragsteg 6, der einen endseitig abgewinkelten Abschnitt 7 umfasst. Der Tragsteg 6 dient zur Fixierung an einer Wand, einem Wandadapter oder an einer Anlageplatte 71 an einer Fassade oder einem anderem Gebäudeteil.

An dem Profil 2 ist integral mit dem Schenkel mit der Nut 5 ein Flügel 8 in Form einer Leiste ausgebildet, die zur Montage eines leistenförmigen Halters 10 dient. Der Halter 10 ist als Profil ausgebildet, das einen U-förmigen Abschnitt mit einem ersten Schenkel 13 und einem zweiten Schenkel 14 ausbildet. An dem ersten Schenkel 13 ist eine äußere Dichtung 11 und an dem zweiten Schenkel 14 ist eine innere Dichtung 12 über eine Profilierung bzw. eine Nut festgelegt. An dem Halter 10 ist ferner ein Steg 15 ausgebildet, der auf dem Flügel 8 aufliegt und dort über Schrauben 16 festgelegt ist. Das Füllungselement 9 ist an dem U-förmigen Abschnitt des Halters 10 zwischen den Dichtungen 11 und 12 eingeklemmt. Dadurch ist das Füllungselement 9 umlaufend an allen vier Seiten zwischen Dichtungen 11 und 12 festgelegt.

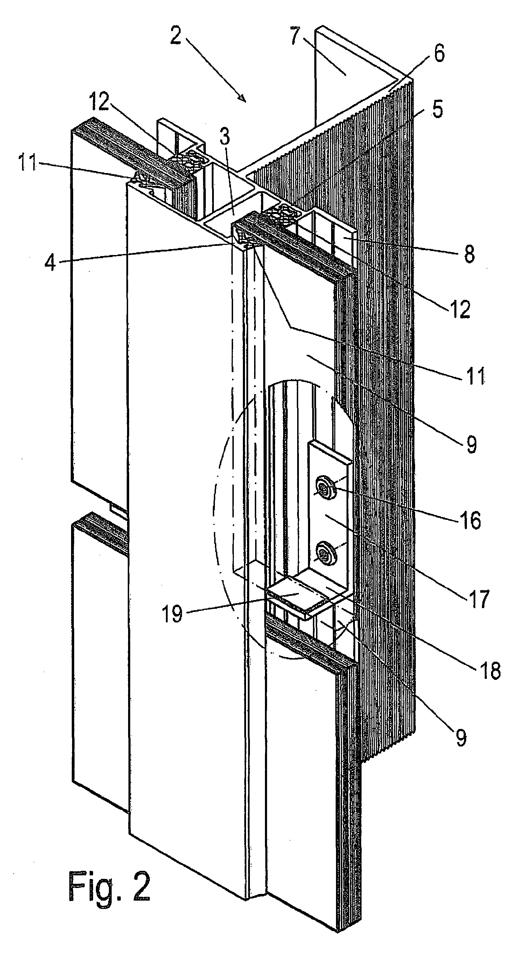

In Figur 2 ist eine modifizierte Ausführungsform einer Hängekonstruktion gezeigt, bei der statt des leistenförmigen Halters 10, der den Spalt zwischen zwei Füllungsplatten 9 überdeckt, nur ein winkelförmiger Halter 17 vorgesehen ist. Der Halter 17 ist über zwei Schrauben 16 an dem Flügel 8 festgelegt und umfasst einen abgewinkelten Abschnitt 18, der senkrecht zur Ebene der Füllungselemente 9 ausgerichtet ist. An dem Abschnitt 18 ist eine elastische Auflage 19, beispielsweise aus Gummi, angeordnet, auf der das entsprechende Füllungselement 9 abgestützt ist. Dadurch ist das Füllungselement 9 umlaufend an zwei Seiten zwischen Dichtungen 11 und 12 festgelegt.

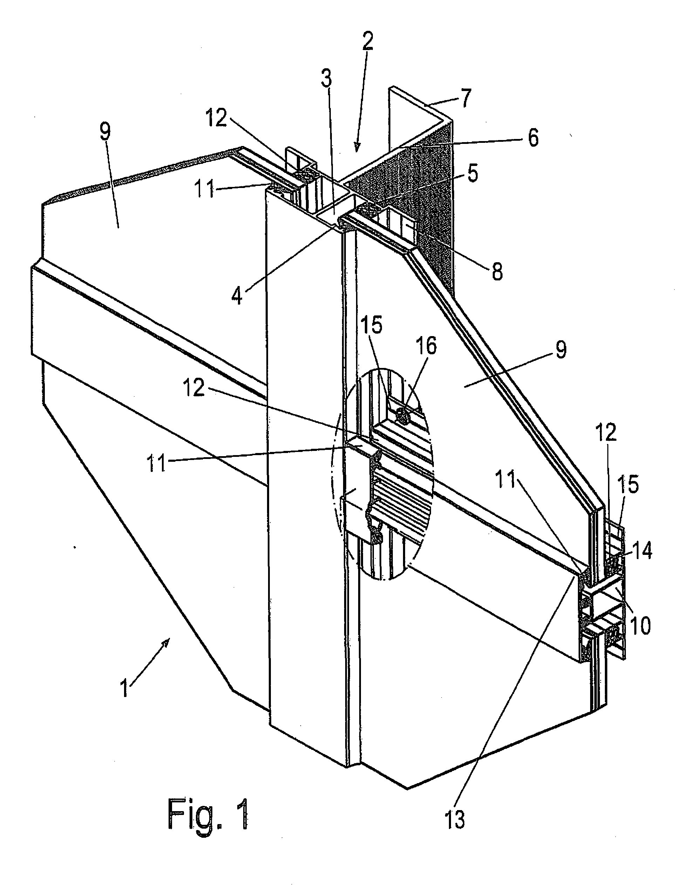

Wie in den Figuren 1 und 2 erkennbar ist, können an dem Profil 2 beidseitig Füllungselemente 9 festgelegt werden, wobei das Profil 2 hierfür zwei voneinander abgewandte U-förmige Abschnitte aufweist, in die jeweils ein Füllungselement 9 randseitig eingefügt ist. Ferner lassen sich an dem Profil 2 in Längsrichtung des Profils 2 mehrere Füllungselemente 9 montieren.

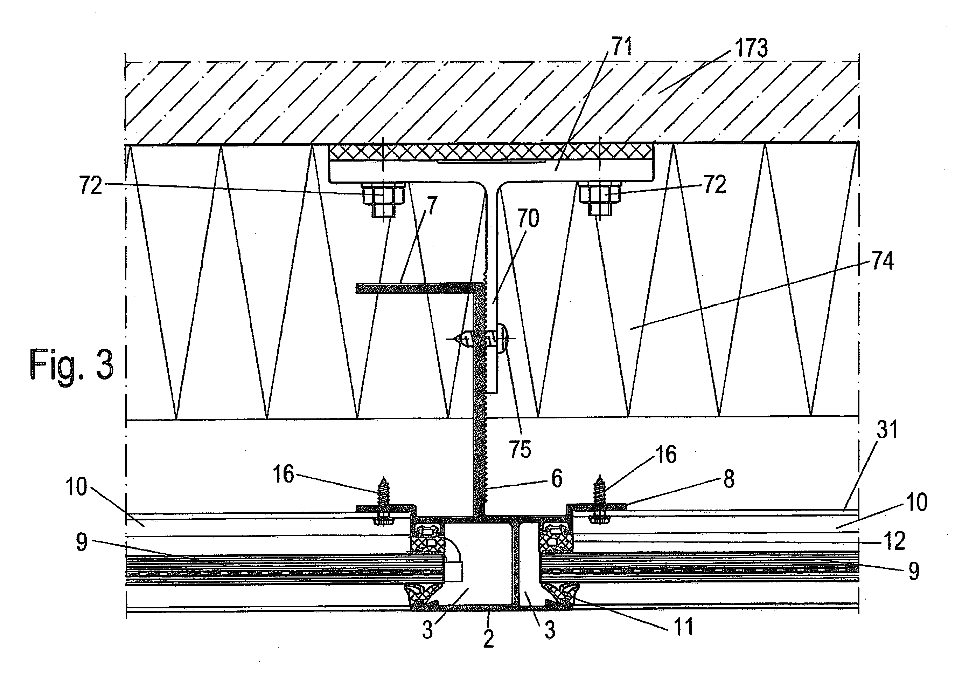

In Figur 3 ist die Hängekonstruktion der Figur 1 oder 2 in einem Schnitt durch das Profil 2 dargestellt. Das Profil 2 besitzt einen nach hinten rückseitig hervorstehenden Tragsteg 6, der an einem bauwerksseitig montierten Halter 70 festgelegt ist. Hierfür ist an dem Steg 6 eine Riffelung ausgebildet, die in eine Riffelung an dem Halter 70 eingreift, wobei die Riffelungen durch Schraubenfüllungen 70 ineinander verkeilt sind. Der Halter 70 ist im Querschnitt im Wesentlichen T-förmig ausgebildet und umfasst eine Anlageplatte 71, die an einer Wand 73 über Bolzen und Muttern 72 festgelegt ist. Die Wand 73 kann beispielsweise aus Beton mit entsprechenden Ankern ausgebildet sein. Auch eine Festlegung des Halters 70 an einer Fassade, einem Lichtdach oder einem anderen Bauwerk ist möglich. An der Wand 73 ist eine Isolierung 74 vorgesehen, in der der Halter 70 angeordnet ist.

An dem Profil 2 sind an den U-förmigen Abschnitten 3 jeweils Füflungselemente 9 randseitig eingefasst und zwischen Dichtungen 11 und 12 eingeklemmt. An dem Flügel 8 sind zusätzlich zu einem Halter 17, 17', optional auch Platten (nicht dargestellt) oder Profile 10 über Schrauben 16 festgelegt. Die Platten können beispielsweise eine Isolierung oder einen Schutz vor Umgebungseinflüssen ausbilden, um das Füllungselement 9 in Form eines Photovoltaikmoduls zu schützen.

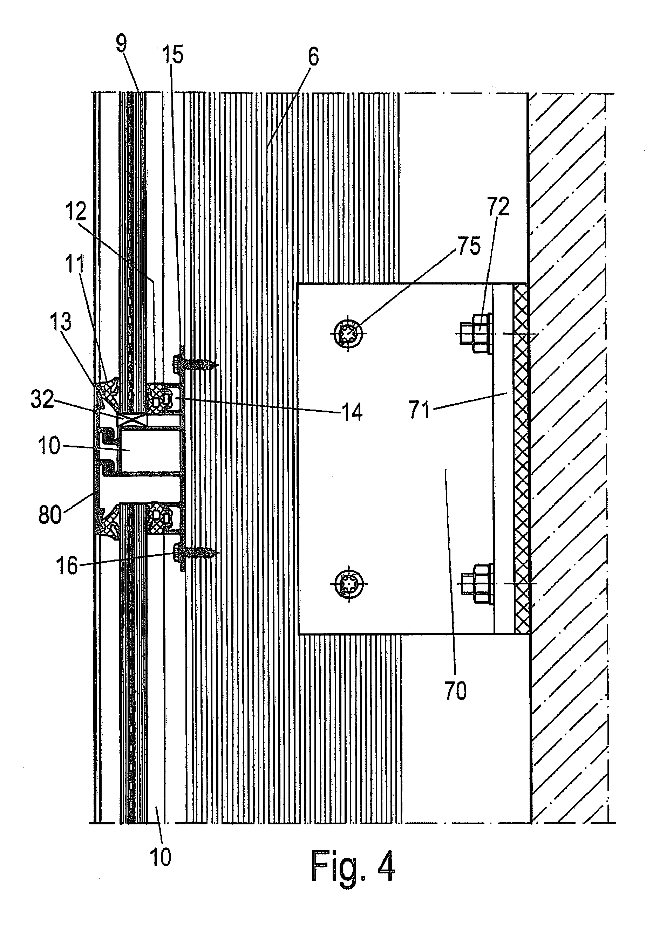

In Figur 4 ist eine Schnittansicht durch die Hängekonstruktion der Figur 1 im Bereich des Profils 10 dargestellt. Das Profil 2 ist mit dem Tragsteg 6 an dem Halter 70 festgelegt, wobei das Profil 10 über Schrauben 16 an dem Flügel 8 festgelegt ist. Das Profil 10 weist eine Hohlkammer auf, an deren Außenseite eine leistenförmige Abdeckplatte 80 montiert ist, die den Spalt zwischen zwei benachbarten Füllungsplatten 9 überdeckt und an der jeweils die äußeren Dichtungen 11 festgelegt sind. Ferner ist an dem Profil 10 ein Abstandshalter 32 zum Abstützen des oberen Füllungselementes 9 angeordnet.

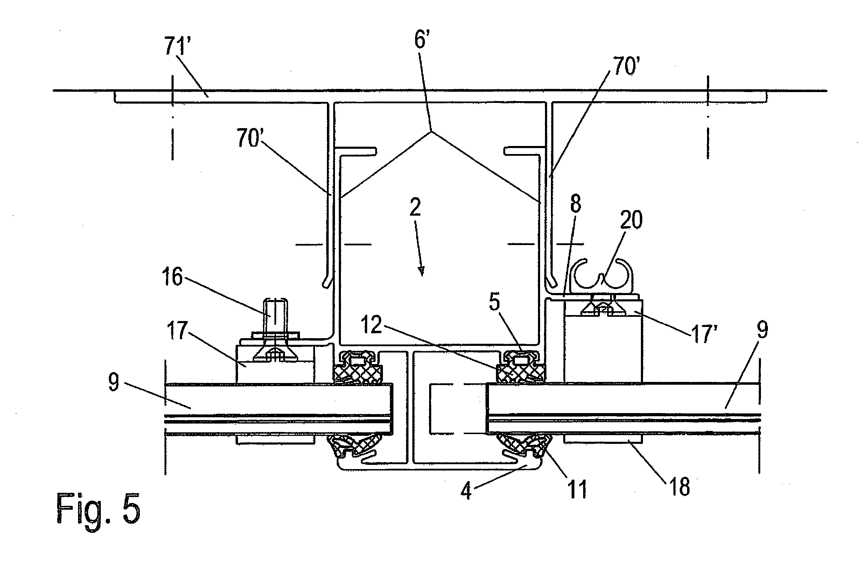

In Figur 5 ist eine modifizierte Ausführungsform einer Hängekonstruktion 1' gezeigt, bei der entsprechend Figur 2 die Füllungselemente 9 über Halter 17 abgestützt sind, die an den Flügeln 8 montiert sind. An dem Flügel 8 ist auf der rechten Seite ein Halter 20 für Leitungen montiert, der integral mit dem Profil 2 ausgebildet sein kann oder als zusätzliches Bauteil festgelegt ist, beispielsweise durch Kleben oder Schrauben.

Bei dem in Figur 5 gezeigten Ausführungsbeispiel sind zwei voneinander beabstandete Tragstege 6' an dem Profil 2' ausgebildet, die jeweils an einem Steg 70' eines Trägers 71 festgelegt sind. Der Träger 71 ist an einer Wand eines Bauwerks montiert und kann somit das Profil 2' abstützen.

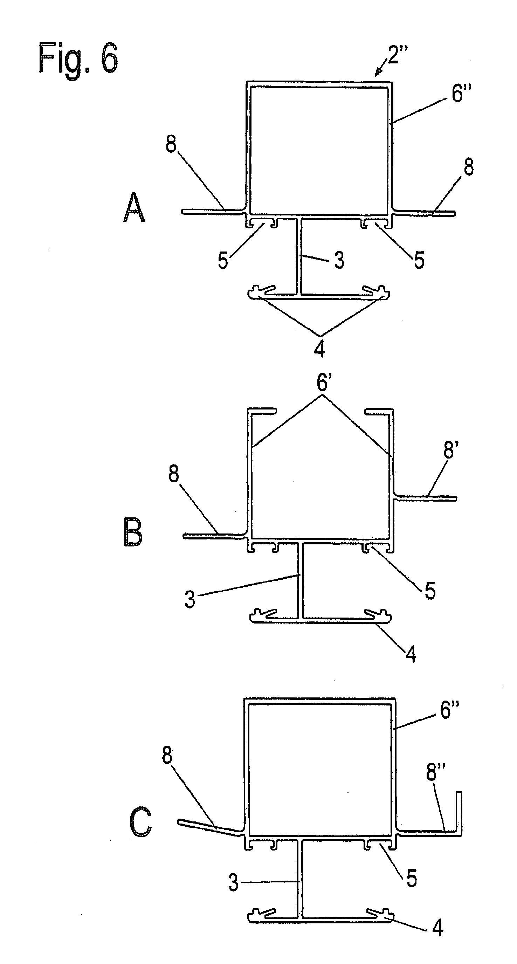

Bei der Hängekonstruktion kann das Profil 2 in unterschiedlichen Ausgestaltungen ausgebildet sein, wie dies in den Figuren 6A bis 6E gezeigt ist.

Bei dem Ausführungsbeispiel der Figur 6A ist ein Profil 2" vorgesehen, das eine rechteckförmige Hohlkammer umfasst, wobei zwei Wände der Hohlkammer die Tragstege 6" des Profils 2" ausbilden und an einem Halter 70' montiert werden können, Im Übrigen besitzt das Profil wie bei den vorangegangenen Ausführungsformen zwei U-förmige Abschnitte 3, an denen die Füllungselemente 9 randseitig eingefügt werden können.

Bei dem in Figur 6B gezeigten Ausführungsbeispiel sind Tragstege 6' vorgesehen, die kein geschlossenes Hohlprofil, sondern ein offenes Hohlprofil ausbilden. Die Tragstege 6' sind endseitig nach innen abgewinkelt und können entsprechend Figur 5 an einem Halter 70' montiert werden. Ferner ist ein Flügel 8' an dem Tragsteg 6' ausgebildet, der einen größeren Abstand zu einem montierten Füllungselement 9 besitzt als der Flügel 8 auf der gegenüberliegenden Seite. Dadurch können auch andere Bauteile an dem Flügel 8' montiert werden, die einen größeren Platzbedarf besitzen.

Bei dem in Figur 6C gezeigten Ausführungsbeispiel ist ein geschlossenes Hohlprofil zur Ausbildung von Tragstegen 6" vorgesehen, an dem auf der rechten Seite ein abgewinkelter Flügel 8" montiert ist, der eine höhere Festigkeit besitzt und auch eine seitliche Fläche für die Montage ausbilden. Auf der linken Seite ist der Flügel 8 leicht gebogen ausgebildet, beispielsweise wenn zwei benachbarte Füllungselemente 9 winklig zueinander montiert werden sollen.

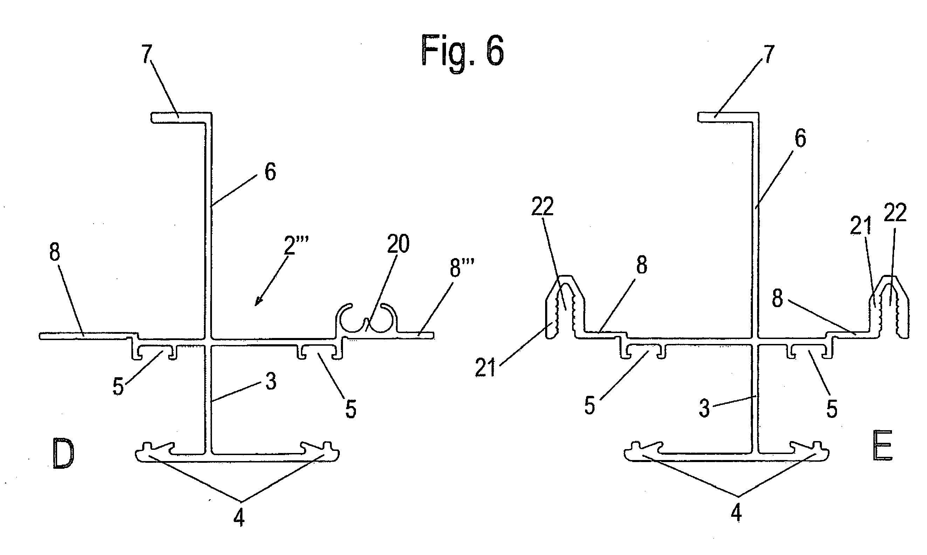

In Figur 6D ist ein weiteres Ausführungsbeispiel eines Profils dargestellt, bei dem ein Tragsteg 6 entsprechend der Figuren 1 und 2 vorgesehen ist. Das Profil 2'" umfasst wieder zwei U-förmige Abschnitte 3 zum Festlegen der Füllungselemente 9, wie dies in den Figuren 1 und 2 gezeigt ist. An einem Flügel 8"' ist integral ein Halter 20 für Leitungen, beispielsweise Elektroleitungen oder fluidführende Leitungen, angeformt.

Bei dem im Figur 6E gezeigten Ausführungsbeispiel eines Profils sind an gegenüberliegenden Seiten Flügel 8 ausgebildete, an denen ein Schraubkanal 22 angeformt ist. Hierfür ist endseitig an dem Flügel 8 ein V-förmiger Abschnitt 21 ausgebildet, in den Schrauben zur Befestigung von Bauteilen eingefügt werden können.

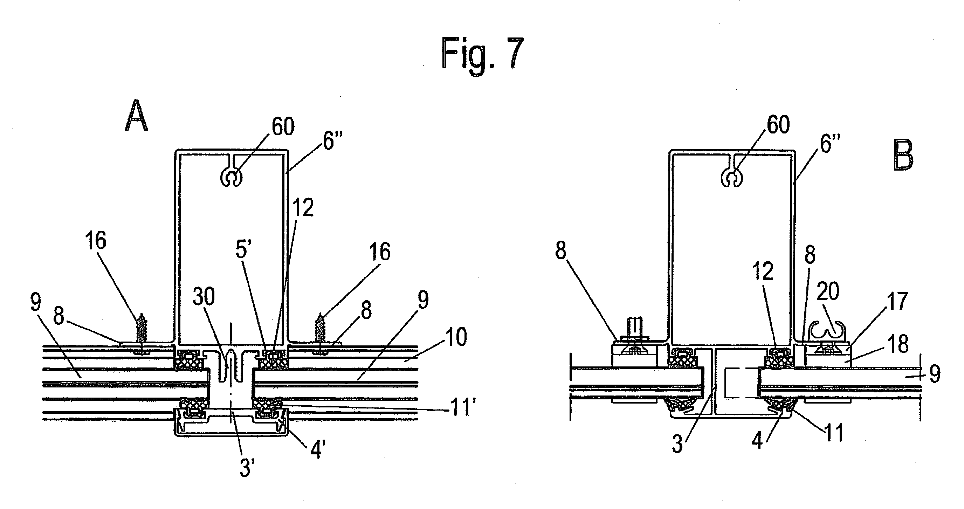

In Figur 7A ist ein weiteres Ausführungsbeispiel einer Hängekonstruktion gezeigt, bei der ein Hohlprofil zur Ausbildung von Tragstegen 6" vorgesehen ist, wobei in der Hohlkammer ein integral ausgebildetes leistenförmiges Befestigungselement 60 vorgesehen ist. An beiden Seiten des Hohlprofils sind seitlich hervorstehende Flügel 8 ausgebildet, die zur Montage eines Halters 10bzw. 17 dienen. Ferner ist an jedem Flügel 9 eine Platte 31 über Schrauben 16 festgelegt. Der U-förmige Abschnitt zur Festlegung der Füllungselemente 9 ist bei diesem Ausführungsbeispiel nicht einteilig ausgebildet, sondern wird durch ein Hohlprofil mit einer Nut 5' für eine Dichtung 12 sowie eine Deckleiste 3' mit einer Nut 4' für eine äußere Dichtung 11' gebildet. Die Deckleiste 3' kann über Schrauben an dem Hohlprofil festgelegt werden, wobei hierfür auf der zur Deckleiste 3' gewandten Seite ein Schraubkanal 30 ausgebildet ist.

In dem in Figur 7B gezeigten Ausführungsbeispiel ist ein einteilig ausgebildetes Profil mit zwei U-förmigen Abschnitten 3 zur Einfassung der Füllungselemente 9 vorgesehen, wobei ein Hohlprofil zur Ausbildung von Tragstegen 6" vorgesehen ist. An dem Hohlprofil 6" ist wiederum ein leistenförmiges Befestigungselement 60 ausgebildet. An gegenüberliegenden Seiten der Tragstege 6" sind Flügel 8 vorgesehen, an denen Halter 10 bzw. 17 montiert sind, wobei an dem Flügel 8 ein Halter 20 für Leitungen festgelegt ist.

Die Profile 2, 2', 2" sind vorzugsweise als extrudierte Metallprofile ausgebildet, insbesondere aus Aluminium. Die Profile 2, 2', 2" dienen insbesondere zur Festlegung von Photovoltaikmodulen an Fassaden oder Dächern, wobei auch andere Bauwerke mit der erfindungsgemäßen Hängekonstruktion nachgerüstet werden können.

Der Halter 17' kann statt einer winkelform auch eine prismatische oder zylindrische Kontur besitzen, wobei er mit einer elastischen Auflage 19 versehen ist. Die Anbindung an den Flügel erfolgt über Schrauben und/oder form-, kraft- und/oder formschlüssige Verbindungsmittel.

## Patentansprüche

1. Hängekonstruktion (1), insbesondere zur Montage an einer Fassade oder einem Dach, mit einem plattenförmigen Füllungselement (9), das zumindest an gegenüberliegenden Seiten an einem Profil (2, 2', 2") randseitig eingefasst ist, und jedes Profil (2, 2', 2") einen im Wesentlichen senkrecht zum Füllungselement (9) verlaufenden Tragsteg (6, 6', 6") aufweist, der an einer Unterkonstruktion (70, 70') festlegbar ist, **dadurch gekennzeichnet, dass** an jedem Profil (2, 2', 2") ein Flügel (8, 8', 8", 8"') vorgesehen ist, an dem ein Halter (10, 17) für das Füllungselement (9) verschraubt ist, so dass Gewichtslasten durch das Füllungselement (9) direkt über den Halter (10, 17) auf das Profil (2, 2', 2") abgetragen werden.

2. Hängekonstruktion nach Anspruch 1, **dadurch gekennzeichnet, dass** der Flügel (8, 8', 8", 8"') als integral mit dem Profil (2, 2', 2") ausgebildete Leiste ausgebildet ist.

3. Hängekonstruktion nach Anspruch 1 oder 2, **dadurch gekennzeichnet, dass** an dem Profil (2, 2', 2") ein U-förmiger Abschnitt ausgebildet ist, in den das Füllungselement (9) randseitig eingefügt ist.

4. Hängekonstruktion nach Anspruch 3, **dadurch gekennzeichnet dass** der U-förmige Abschnitt integral mit dem Profil (2, 2', 2") ausgebildet ist.

5. Hängekonstruktion nach einem der Ansprüche 1 bis 4, **dadurch gekennzeichnet, dass** an dem Profil (2, 2', 2") an gegenüberliegenden Seiten jeweils eine Füllungsplatte (9) randseitig eingefasst ist.

6. Hängekonstruktion nach Anspruch 5, **dadurch gekennzeichnet, dass** an dem Profil (2, 2', 2") voneinander abgewandte U-förmige Abschnitte ausgebildet sind.

7. Hängekonstruktion nach einem der Ansprüche 1 bis 6, **dadurch gekennzeichnet, dass** der Flügel 8 auf der zum Füllungselement (9) gewandten Seite des Tragsteges (6, 6', 6") und ein U-förmiger Abschnitt an der gegenüberliegenden Seite ausgebildet ist.

8. Hängekonstruktion nach einem der Ansprüche 1 bis 7, **dadurch gekennzeichnet, dass** der Halter (10, 17) an dem Flügel (8, 8', 8", 8''') angeschraubt ist.

9. Hängekonstruktion nach einem der Ansprüche 1 bis 8, **dadurch gekennzeichnet, dass** der Halter (17) als Winkel ausgebildet ist.

10. Hängekonstruktion nach einem der Ansprüche 1 bis 8, **dadurch gekennzeichnet, dass** der Halter (10) als Leiste ausgebildet ist, die einen Spalt zwischen zwei Füllungsplatten (9) überdeckt.

11. Hängekonstruktion nach einem der Ansprüche 1 bis 10, **dadurch gekennzeichnet, dass** an dem Profil (2, 2', 2") ein Leitungshalter (20) angeformt oder festgelegt ist.

12. Hängekonstruktion nach einem der Ansprüche 1 bis 11, **dadurch gekennzeichnet, dass** das Profil (2, 2', 2") als extrudiertes Metallprofil, insbesondere aus Aluminium, ausgebildet ist.

13. Hängekonstruktion nach einem der Ansprüche 1 bis 12, **dadurch gekennzeichnet, dass** das Füllungselement (9) randseitig zwischen zwei Dichtungen (11, 12) klemmend festgelegt ist.

14. Hängekonstruktion nach einem der Ansprüche 1 bis 13, **dadurch gekennzeichnet, dass** das Füllungselement (9) als Photovoltaikmodul ausgebildet ist.

15. Hängekonstruktion nach einem der Ansprüche 1 bis 8, **dadurch gekennzeichnet, dass** der Halter (17') als zylindrischer Körper ausgebildet ist.

## Claims

1. Suspended structure (1), in particular for mounting on a facade or a roof, having a panel-like filling element (9) which, at least on opposite sides, is bordered peripherally by a profile (2, 2', 2"), and each profile (2, 2', 2") has a load-bearing crosspiece (6, 6', 6"), which runs essentially perpendicularly to the filling element (9) and can be secured on a substructure (70, 70'), **characterized in that** each profile (2, 2',2'') has provided on it a wing (8, 8', 8 ", 8"'), to which is screwed a holder (10, 17) for the filling element (9), and therefore loading by the filling element (9) is dissipated to the profile (2, 2', 2") directly via the holder (10, 17).

2. Suspended structure according to Claim 1, **characterized in that** the wing (8, 8', 8", 8"') is in the form of a strip which is integral with the profile (2, 2', 2'').

3. Suspended structure according to Claim 1 or 2, **characterized in that** a U-shaped portion, into which the filling element (9) is inserted peripherally, is formed on the profile (2, 2', 2").

4. Suspended structure according to Claim 3, **characterized in that** the U-shaped portion is integral with the profile (2, 2', 2").

5. Suspended structure according to one of Claims 1 to 4, **characterized in that** in each case one filling panel (9) is bordered peripherally on opposite sides by the profile (2, 2', 2").

6. Suspended structure according to Claim 5, **characterized in that** U-shaped portions which are directed away from one another are formed on the profile (2, 2', 2").

7. Suspended structure according to one of Claims 1 to 6, **characterized in that** the wing (8) is formed on that side of the load-bearing crosspiece (6, 6', 6") which is directed towards the filling element (9) and a U-shaped portion is formed on the opposite side.

8. Suspended structure according to one of Claims 1 to 7, **characterized in that** the holder (10, 17) is screwed to the wing (8, 8', 8", 8''').

9. Suspended structure according to one of Claims 1 to 8, **characterized in that** the holder (17) is in the form of an angled element.

10. Suspended structure according to one of Claims 1 to 8, **characterized in that** the holder (10) is in the form of a strip which covers over a gap between two filling panels (9).

11. Suspended structure according to one of Claims 1 to 10, **characterized in that** a line holder (20) is formed or secured on the profile (2, 2', 2").

12. Suspended structure according to one of Claims 1 to 11, **characterized in that** the profile (2, 2', 2") is in the form of an extruded metal profile, in particular made of aluminium.

13. Suspended structure according to one of Claims 1 to 12, **characterized in that** the filling element (9) is secured peripherally with clamping action between two seals (11, 12).

14. Suspended structure according to one of Claims 1 to 13, **characterized in that** the filling element (9) is in the form of a photovoltaic module.

15. Suspended structure according to one of Claims 1 to 8, **characterized in that** the holder (17') is in the form of a cylindrical body.

## Revendications

1. Construction suspendue (1) destinée en particulier à être montée sur une façade ou sur une toiture comportant un élément de remplissage (9) qui est encadré au niveau de ses bords sur au moins deux côtés opposés par un profilé (2, 2', 2"), et chacun des profilés (2, 2', 2") comportant une branche support (6, 6', 6") s'étendant essentiellement perpendiculairement à l'élément de remplissage (9), et pouvant être fixé à une infrastructure (70, 70'),
**caractérisée en ce que**
sur chacun des profilés (2, 2', 2") est prévue une ailette (8, 8', 8", 8"') sur laquelle est vissé un élément de fixation (10, 17) de l'élément de remplissage (9) de sorte que des charges pondérales s'exerçant sur l'élément de remplissage (10), soient directement transmises au profilé (2, 2', 2") par l'élément de maintien (10, 17).

2. Construction suspendue conforme à la revendication 1,
**caractérisée en ce que**
l'ailette (8, 8', 8", 8"') est réalisée sous la forme d'une baguette faisant partie intégrante du profilé (2, 2', 2").

3. Construction suspendue conforme à la revendication 1 ou 2, **caractérisée en ce que**
sur le profilé (2, 2', 2") est formé un segment en forme de U dans lequel est inséré l'élément de remplissage (9) au niveau de ses bords.

4. Construction suspendue conforme à la revendication 3,
**caractérisée en ce que**
le segment en forme de U est réalisé intégralement avec le profilé (2, 2', 2").

5. Construction suspendue conforme à l'une des revendications 1 à 4,
**caractérisée en ce qu'**
une plaque de remplissage (9) est respectivement entourée au niveau de ses bords sur ses côtés opposés par le profilé (2, 2', 2").

6. Construction suspendue conforme à la revendication 5,
**caractérisée en ce que**
sur le profilé (2, 2', 2") sont formés des segments en forme de U situés à l'opposé l'un de l'autre.

7. Construction suspendue conforme à l'une des revendications 1 à 6,
**caractérisée en ce que**
l'ailette (8) est formée du côté de la branche support (6, 6', 6") tournée vers l'élément de remplissage (9) tandis qu'un segment en forme de U est formé du côté opposé.

8. Construction suspendue conforme à l'une des revendications 1 à 7,
**caractérisée en ce que**
l'élément de fixation (10, 17) est vissé sur l'ailette (8, 8', 8", 8"').

9. Construction suspendue conforme à l'une des revendications 1 à 8,
**caractérisée en ce que**
l'élément de fixation (17) est réalisé sous la forme d'une cornière.

10. Construction suspendue conforme à l'une des revendications 1 à 8,
**caractérisée en ce que**
l'élément de fixation (10) est réalisé sous la forme d'une baguette qui chevauche un interstice situé entre deux plaques de remplissage (9).

11. Construction suspendue conforme à l'une des revendications 1 à 10,
**caractérisée en ce que**
sur le profilé (2, 2', 2") est formé ou fixé un élément de maintien de conducteurs (20).

12. Construction suspendue conforme à l'une des revendications 1 à 11,
**caractérisée en ce que**
le profilé (2, 2', 2") est réalisé sous la forme d'un profilé métallique extrudé, en particulier en aluminium.

13. Construction suspendue conforme à l'une des revendications 1 à 12,
**caractérisée en ce que**
l'élément de remplissage (9) est fixé par serrage au niveau de ses bords entre deux garnitures d'étanchéité (11, 12).

14. Construction suspendue conforme à l'une des revendications 1 à 13,
**caractérisée en ce que**
l'élément de remplissage (9) est réalisé sous la forme d'un module photovoltaïque.

15. Construction suspendue conforme à l'une des revendications 1 à 8,
**caractérisée en ce que**
l'élément de fixation (17') est réalisé sous la forme d'un corps cylindrique.
